# EUROPÄISCHE PATENTSCHRIFT

(11) **EP 2 421 927 B1**
(45) Veröffentlichungstag und Bekanntmachung des Hinweises auf die Patenterteilung: **22.11.2017**
(21) Anmeldenummer: 10701498.7
(22) Anmeldetag: 18.01.2010
(51) Int. Cl.: C09J 7/02, B26D 7/08

(54) **KLEBFOLIE MIT RÜCKSTELLENDEN EIGENSCHAFTEN**
ADHESIVE FILM HAVING RESILIENT PROPERTIES
FEUILLE ADHÉSIVE PRÉSENTANT DES PROPRIÉTÉS DE RAPPEL

(30) Priorität: 24.04.2009 DE 102009018519
(43) Veröffentlichungstag der Anmeldung: 29.02.2012
(73) Patentinhaber: tesa SE, 22848 Norderstedt (DE)
(72) Erfinder: NEUHAUS-STEINMETZ, Hermann, 22926 Ahrensburg (DE); GULDBRANDSEN, Lars, 21509 Glinde (DE); KÖNIG, Sven, CH-4153 Reinach (CH)
(86) Internationale Anmeldenummer: PCT/EP2010/050539
(87) Internationale Veröffentlichungsnummer: WO 2010/121843

(56) Entgegenhaltungen:
- EP-A1- 1 777 276
- EP-A2- 1 312 658
- DE-A1- 10 052 955
- DE-A1- 10 361 164

## Beschreibung

Die Erfindung betrifft eine Klebfolie mit Rückstelleigenschaften, ein Verfahren zu deren Herstellung sowie Stanzprodukte, welche mit einer derartigen Klebfolie hergestellt werden.

Frontplatten mit Beschriftungen und funktionelle Platten für elektronische und andere Geräte werden in großen Mengen industriell mit doppelseitigen Klebebändern auf Gehäuse oder andere Untergründe geklebt. Mit Hilfe von Stanzen wird das Klebeband aus Rollen- oder Ballenmaterial in die gewünschte Form gebracht. An den durchstanzten Kanten neigen die Klebemassen jedoch wieder zum Zusammenfließen, da keine Kräfte zum Zurückziehen von den Stanzkanten vorhanden sind. Dieses gilt verstärkt, wenn die gestanzten Formflächen nicht sofort, sondern erst zu einem späteren Zeitpunkt entnommen werden, was besonders bei der manuellen Weiterverarbeitung der Fall ist.

Bei üblich verwendeten doppelseitigen Klebebändern nach dem Stand der Technik führt das teilweise Wiederzusammenfließen von Klebern an Stanz- und Schneidkanten bei automatischer Verarbeitung zu geringeren Maschinengeschwindigkeiten und erhöhtem Ausschuss. Bei der manuellen Verarbeitung führt das teilweise Wiederzusammenfließen von Klebern zu einem erheblichen Mehraufwand bei der Verarbeitung.

Die DE 100 52 955 A1 offenbart die Verwendung von Haftklebemassen mit anisotropen Eigenschaften für Stanzprodukte. Durch die anisotropen Eigenschaften weisen derartige Haftklebemassen ein Rückstellverhalten auf, wenn sie in gerecktem Zustand auf einen Träger beschichtet werden.

In den Schriften DE 101 57 152 A1 und 101 57 153 A1 werden Verfahren zur Herstellung haftklebriger Stanzprodukte mittels derartiger Haftklebemassen beschrieben. Hier werden Klebemassen mit Beschichtungsdüsen im gedehnten Zustand auf einen Träger aufgebracht. Die elastischen Rückzugskräfte der Klebemassen führen dazu, dass sie sich bei der Verarbeitung von Stanz- und Schneidkanten zurückziehen, wodurch eine Verringerung des Zurückfließens mit der Folge der unerwünschten Wiederverklebung reduziert wird.

Bedingt durch die für ein Klebeband notwendigen viskoelastischen Eigenschaften, mit der Fähigkeit zum Auffließen auf Untergründe, baut sich der Spannungszustand durch das Auftragen der Klebemasse im gedehnten Zustand in wenigen Wochen ab. Ein so hergestelltes Klebeband muss also kurz nach der Herstellung verarbeitet werden, damit der gewünschte Effekt zur Wirkung kommen kann. Insbesondere bei Transporten und Lagerung in warmen Regionen verkürzt sich die Zeit weiter, so dass für die Verarbeitung solcher Klebebänder in diesen Regionen ein kaum zu bewerkstelligender Aufwand entsteht.

Weiterhin wird der Kleber bei der Herstellung nur in Maschinenlaufrichtung gedehnt, so dass der gewünschte Effekt nur bei Stanz- oder Schneidekanten quer zur Laufrichtung zu beobachten ist. Bei Stanz- oder Schneidekanten in Längsrichtung ist die Neigung zum Wiederverkleben genau wie bei herkömmlichen Klebbändern vorhanden.

Aufgabe der Erfindung ist es, Klebfolien zur Verfügung zu stellen, die gegenüber dem Stand der Technik verbesserte Verarbeitungseigenschaften, insbesondere in Stanzprozessen, aufweisen, bei welchen insbesondere während oder nach einem Stanz- oder Schneideprozess die Stanz- oder Schneidkanten nicht wieder miteinander verkleben, und welche die vorteilhaften Eigenschaften über einen hinreichend langen Zeitraum aufweisen.

Diese Aufgabe wird durch die Merkmale der Ansprüche 1, 9 und 14 gelöst. Zweckmäßige Ausgestaltungen der Erfindungen ergeben sich aus den Merkmalen der Ansprüche 2 bis 8 und 10 bis 13.

Nach Maßgabe der Erfindung ist eine Klebfolie, insbesondere für die Verwendung in einem Stanzprozess, vorgesehen, die einen Träger und zumindest eine Schicht einer Klebemasse umfasst, wobei die Klebemasse zwei oder mehrere Unterschichten aufweist und mindestens eine der Unterschichten in einem mechanisch gespannten Zustand vorliegt.

Die erfindungsgemäße Klebfolie weist aufgrund der Unterschicht, die in einem mechanisch gespannten Zustand vorliegt, vorteilhafte Eigenschaften auf. Insbesondere wird ein Zusammenfließen der Klebemasse nicht an Stanz- bzw. Schneidkanten, die quer zur Laufrichtung verlaufen, sondern auch bei Stanz- oder Schneidekanten in Längsrichtung verhindert. Ferner wird das Zusammenfließen im Vergleich zu den bisher bekannten Klebefolien für einen erheblich längeren Zeitraum verhindert.

In einer Ausführungsform der Erfindung weist die Klebfolie einen Träger und Schichten einer Klebemasse auf beiden Seiten des Trägers auf, wobei eine oder beide Klebemasseschichten aus Unterschichten mit verschiedenen Eigenschaften zusammengesetzt sind und wobei mindestens eine der Unterschichten mechanisch gespannt ist.

Der Begriff "Folie" bezieht sich in der vorliegenden Erfindung auf flächige Gebilde aller Art und umfasst insbesondere auch zweidimensional flächige Gebilde (z. B. Rollenware, Ballenware) sowie längliche Gebilde (z. B. Klebebänder). Ebenso umfasst der Begriff "Folie" zweidimensional begrenzt ausgedehnte Gebilde (z. B. Etiketten).

Der Träger ist auf einer Seite oder beiden Seiten mit einer Schicht einer Klebemasse beschicht. Diese Schicht einer Klebemasse wird nachfolgend auch als Klebemasse-Schicht bezeichnet. Die Klebemasse-Schicht besteht aus mehreren Unterschichten. Der Begriff "Unterschicht" bezeichnet dabei einen Teil der Klebemasse-Schicht, wobei dieser Teil selbst schichtförmig ausgebildet ist. Die Klebemasse-Schicht umfasst zumindest zwei derartige Unterschichten. Eine dieser Unterschichten liegt dabei in einem mechanisch gespannten Zustand vor.

Unter dem Ausdruck "Unterschicht in einem mechanisch gespannten Zustand" wird hier insbesondere eine Unterschicht mit mechanischen Eigenschaften verstanden, die bewirken, dass in der Unterschicht die Spannungen auf Grund des gereckten Zustandes erst nach sehr langer Zeit relaxieren. Vorzugsweise ist der mechanisch gespannte Zustand der Unterschicht eingefroren.

Durch den mechanisch gespannten Zustand weisen die erfindungsgemäßen Klebfolien ein Rückstellverhalten auf, so dass es bei dem Stanz-, Schneid- oder Quetschprozess zu einem Zurückziehen der mechanisch gespannten Klebemasse-Unterschichten und damit der ganzen Klebemasse-Schicht kommt. Ein Wiederzusammenfließen der Klebemasse nach dem Stanzen, Schneiden oder Quetschen der Klebfolie wird somit verhindert.

Vorzugsweise ist die äußere Unterschicht der Klebemasse-Schicht, d. h. die Unterschicht die dem Träger abgewandt ist, klebend, während zumindest eine der Unterschichten, die dem Träger zugewandt sind, beispielsweise die Unterschicht, die an den Träger angrenzt, eine Unterschicht ist, die in einem mechanisch gespannten Zustand vorliegt.

Das Rückstellverhalten der Klebfolie kann dadurch erzeugt werden, dass die KlebmasseSchichten bei der Beschichtung gereckt werden und im gereckten Zustand auf den Träger oder einen Releaseliner gelegt werden. Dieses kann zum Beispiel mit einer Extrusionsdüse geschehen, deren Spalt für den Klebemasseaustritt deutlich größer ist als die anschließende Schichtdicke der Klebemasse auf dem Substrat.

Gemäß einer bevorzugten Ausführungsform der Erfindung erfolgt die Reckung monoaxial, besonders bevorzugt in Längsrichtung (Düsenaustrittsrichtung). Möglich ist auch, dass zusätzlich eine Reckung in Querrichtung vorgenommen wird, so dass eine biaxiale Reckung vorliegt.

Vorteilhafte erfindungsgemäße Klebfolien sind doppelseitig klebend, bei ihnen ist der Träger also doppelseitig mit Klebemasse beschichtet.

Nach Maßgabe der Erfindung ist ferner ein Verfahren zur Herstellung der erfindungsgemäßen Klebefolie vorgesehen, bei dem eine Klebemasse, die zwei oder mehr Unterschichten umfasst, im gereckten Zustand auf ein flächiges Material unter Erhalt der Klebemasse-Schicht beschichtet wird, wobei zumindest eine der Unterschichten der Klebemasse-Schicht in einem mechanisch gespannten Zustand vorliegt.

In einer vorteilhaften Ausführungsform des erfindungsgemäßen Verfahrens wird ein Träger über eine Co-Extrusionsdüse mit einer Klebemasse, bestehend aus zwei oder mehr Unterschichten, in gerecktem Zustand beschichtet und vernetzt. Hierbei ist mindestens die äußere Unterschicht klebend. Mindestens eine der, vorzugsweise nicht äußeren, Unterschichten hat mechanische Eigenschaften, die bewirken, dass die Spannungen auf Grund des gereckten Zustandes erst nach sehr langer Zeit relaxieren. Nach der Vernetzung wird die Klebemasse-Schicht mit einem Releaseliner abgedeckt. Im nächsten Arbeitsschritt wird die andere Seite des Trägers über eine Co-Extrusionsdüse mit einer Klebemasse, bestehend aus zwei oder mehr Unterschichten, in gerecktem Zustand beschichtet und vernetzt. Hierbei ist mindestens die äußere Unterschicht klebend. Mindestens eine der, vorzugsweise nicht äußeren, Unterschichten hat mechanische Eigenschaften, die bewirken, dass die Spannungen auf Grund des gereckten Zustandes erst nach sehr langer Zeit relaxieren.

In einer weiteren vorteilhaften Ausführungsform des erfindungsgemäßen Verfahrens wird ein Releaseliner über eine Co-Extrusionsdüse mit einer im gereckten Zustand befindlichen Klebemasse, bestehend aus zwei oder mehr Unterschichten, beschichtet und anschließend vernetzt. Hierbei ist mindestens die äußere Unterschicht klebend. Mindestens eine der, vorzugsweise nicht äußeren Unterschichten der Klebemasse-Schicht hat mechanische Eigenschaften, die bewirken, dass die Spannungen auf Grund des gereckten Zustandes erst nach sehr langer Zeit relaxieren. Nach der Vernetzung wird der Träger auf die Masseschicht laminiert. Im nächsten Arbeitsschritt wird die andere Seite des Trägers über eine Co-Extrusionsdüse mit einer im gereckten Zustand befindlichen Masse, bestehend aus zwei oder mehr Unterschichten, beschichtet und anschließend vernetzt. Hierbei ist mindestens die äußere Unterschicht klebend. Mindestens eine der, vorzugsweise nicht äußeren Unterschichten hat mechanische Eigenschaften, die bewirken, dass die Spannungen auf Grund des gereckten Zustandes erst nach sehr langer Zeit relaxieren.

In einer weiteren vorteilhaften Ausführungsform wird eine im gereckten Zustand befindliche Klebemasse, bestehend aus zwei oder mehr Unterschichten, über eine Co-Extrusionsdüse auf eine Walze mit einer Oberfläche, von der eine klebende Masse wieder abziehbar ist, beschichtet, wobei die trennende Wirkung der Masseoberfläche zum Beispiel über eine Struktur, eine Beschichtung, eine mitlaufende Releasebahn oder auch eine Fluidschicht auf der Walze erreicht werden kann. Die Vernetzung erfolgt auf der beschriebenen Walze. Nach der Vernetzung wird die Klebemasse auf einen Releaseliner laminiert. Bei der Klebemasse ist mindestens die dem Releaseliner zugewandte Unterschicht klebend. Mindestens eine der Unterschichten hat mechanische Eigenschaften, die bewirken, dass die Spannungen auf Grund des gereckten Zustandes erst nach sehr langer Zeit relaxieren. Nach der Vernetzung wird der Träger auf die Klebemasseschicht laminiert. Im nächsten Arbeitsschritt wird wieder eine vom Aufbau her gleiche oder ähnliche Klebemasse mit zwei oder mehreren Unterschichten über eine Co-Extrusionsdüse auf eine gleiche Walze in gerecktem Zustand beschichtet und vernetzt. Anschließend wird die Masse von der Walze auf die Trägerseite des Verbundes aus dem vorherigen Arbeitsschrittes laminiert.

Ein weiter verbessertes Rückstellverhalten der Klebfolie wird erzielt, indem zumindest eine Klebemasse ein elastisches Rückstellverhalten aufweist. Bei doppelseitigen Klebfolien zeigen vorteilhaft beide Klebemassen dieses Verhalten.

Als Klebemassen mit eigenem Rückstellverhalten werden vorteilhaft anisotrope Klebemassen eingesetzt.

Als Klebemassen mit eigenem Rückstellverhalten sind insbesondere Haftklebemassen geeignet, die zu mindestens 65 Gew.-% auf zumindest einem acrylischen Monomer aus der Gruppe der Verbindungen der allgemeinen Formel CH₂=(CR¹)COOR², wobei R¹ = H oder CH₃ und R² gewählt wird als H, CH₃ oder aus der Gruppe der verzweigten oder unverzweigten, gesättigten Alkylgruppen mit 2 bis 20 C-Atomen, basieren, und bei denen weiterhin das mittlere Molekulargewicht M_{w} mindestens 650.000 g/mol beträgt. Die auf einen Träger aufgetragene Haftklebemasse besitzt eine Vorzugsrichtung derart, dass der in Vorzugsrichtung gemessene Brechungsindex n_{MD} größer ist als der in einer Richtung senkrecht zur Vorzugsrichtung gemessene Brechungsindex n_{CD}, wobei die Differenz Δn = n_{MD} - n_{CD} mindestens 1x10⁻⁵ beträgt.

Das gewichtsmittlere Molekulargewicht M_{w} wird mittels Gelpermeations-chromatographie (GPC) bestimmt. Als Eluent wird THF mit 0,1 Vol.-% Trifluoressigsäure eingesetzt. Die Messung erfolgt bei 25 °C. Als Vorsäule wird PSS-SDV, 5 µ, 10³ Å, ID 8,0 mm x 50 mm verwendet. Zur Auftrennung werden die Säulen PSS-SDV, 5 µ, 10³ sowie 10⁵ und 10⁶ mit jeweils ID 8,0 mm x 300 mm eingesetzt. Die Probenkonzentration beträgt 4 g/l, die Durchflussmenge 1,0 ml pro Minute. Es wird gegen PMMA-Standards gemessen. (µ = µm; 1 Å = 10⁻¹⁰ m).

Der Brechungsindex (heute üblicherweise als Brechzahl bezeichnet) ist eine Stoffkonstante und gibt die optische Dichte beziehungsweise die Geschwindigkeit der Ausbreitung von Lichtwellen in einem Material wieder. Der Brechungsindex der Klebmassen wird mit einem Abbe-Refraktometer nach DIN 51423 bestimmt. Gemäß der DIN-Vorschrift erfolgt die Messung bei einer Temperierung auf 20 °C und bei einer Wellenlänge von 589 nm mit einer Natrium-Spektrallampe (Brechungsindex für die Natrium-d-Linie entsprechend 589 nm bei 20 °C).

Als Klebemassen zur Herstellung der erfindungsgemäßen Klebemasse-Schicht sind ferner Haftklebesysteme geeignet, welche mindestens eine Haftklebemasse auf Basis von zumindest einem Blockcopolymer enthalten, wobei die Gewichtsanteile der Blockcopolymere in Summe zumindest 50 % der Haftklebemasse ausmachen, wobei zumindest ein Blockcopolymer zumindest teilweise auf Basis von (Meth-)Acrylsäurederivaten zusammengesetzt ist, wobei weiterhin zumindest ein Blockcopolymer mindestens die Einheit P(A)-P(B)-P(A) aus wenigstens einem Polymerblock P(B) und wenigstens zwei Polymerblöcken P(A) aufweist und wobei
- P(A) unabhängig voneinander Homo- oder Copolymerblöcke aus Monomeren A repräsentieren, wobei die Polymerblöcke P(A) jeweils eine Erweichungstemperatur im Bereich von + 20 °C bis + 175 °C aufweisen,
- P(B) einen Homo- oder Copolymerblock aus Monomeren B repräsentiert, wobei der Polymerblock P(B) eine Erweichungstemperatur im Bereich von - 130 °C bis + 10 °C aufweist,
- die Polymerblöcke P(A) und P(B) nicht homogen miteinander mischbar sind, und
- das haftklebende System orientiert ist, indem es eine Vorzugsrichtung besitzt, wobei der in Vorzugsrichtung gemessene Brechungsindex n_{MD} größer ist als der in einer Richtung senkrecht zur Vorzugsrichtung gemessene Brechungsindex n_{CD}.

Nach Maßgabe der Erfindung sind ferner Stanzlinge vorgesehen, welche durch Stanzung einer erfindungsgemäßen Klebfolie hergestellt werden.

Die Erfindung wird nachstehend anhand von Beispielen unter Bezugnahme auf die Zeichnungen näher erläutert. Dabei zeigen
- Fig. 1: eine schematische Querschnittsdarstellung einer ersten Ausführungsform der Klebefolie, bei der der Träger beidseitig mit einer Klebemasse-Schicht beschicht ist; und
- Fig. 2: eine schematische Querschnittsdarstellung einer zweite Ausführungsform der Klebefolie, bei der der Träger nur einseitig mit einer Klebemasse-Schicht beschicht ist.

### Beispiele

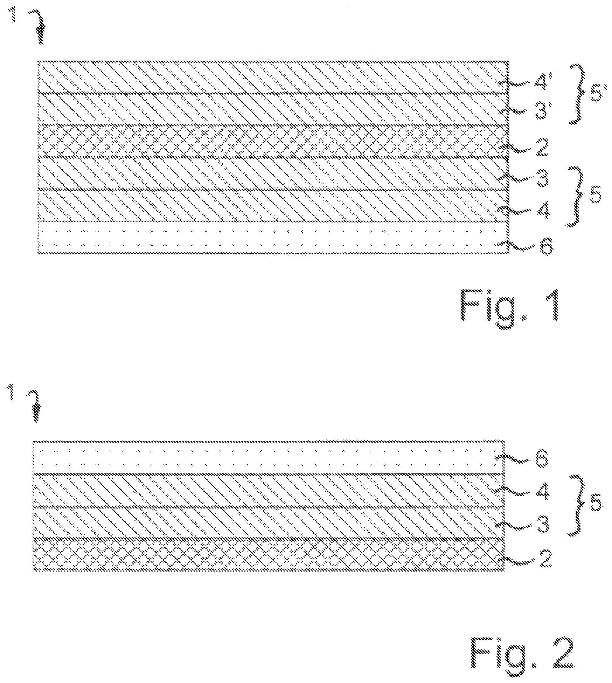

Die in Fig. 1 gezeigte Ausführungsform der erfindungsgemäßen Klebfolie 1 ist beidseitig mit einer Klebemasse-Schicht 5, 5' ausgerüstet. Die Klebfolie 1 weist einen Träger 2 auf, dessen erste Oberfläche mit einer ersten Klebmasse-Schicht 5 beschicht ist. Die Klebmasse-Schicht 5 besteht aus zwei Unterschichten 3, 4. Die dem Träger 2 zugewandte, innere Unterschicht 3 der Klebmasse-Schicht 5 liegt im mechanisch gespannten Zustand vor, während die dem Träger 2 abgewandte, äußere Unterschicht 4 der Klebmasse-Schicht 5 klebend ausgerüstet ist.

Die zweite Oberfläche des Trägers 2 ist mit einer zweiten Klebmasse-Schicht 5' beschicht ist. Die Klebmasse-Schicht 5' besteht aus zwei Unterschichten 3', 4'. Die dem Träger 2 zugewandte, innere Unterschicht 3' der zweiten Klebmasse-Schicht 5' liegt im mechanisch gespannten Zustand vor, während die dem Träger 2 abgewandte, äußere Unterschicht 4' der Klebmasse-Schicht 5' klebend ausgerüstet ist.

Auf die Klebemasse-Schicht 5 ist vor dem Aufbringen der zweiten Klebemasse-Schicht 5' ein Releaseliner 6 aufgebracht worden.

Jede der Klebemasse-Schichten 5, 5' kann weitere Unterschichten umfassen. Ferner können sich die Klebemassen-Schichten 5, 5' sowohl im Aufbau, beispielsweise in Bezug auf die Zahl der Unterschichten, als auch in der chemischen Zusammensetzung der Unterschichten unterscheiden.

Die in Fig. 2 gezeigte Klebfolie ist nur einseitig mit einer Klebemasse-Schicht (5) beschichtet. Die Klebmasse-Schicht 5 besteht aus zwei Unterschichten 3, 4. Die dem Träger 2 zugewandte, innere Unterschicht 3 der Klebmasse-Schicht 5 liegt im mechanisch gespannten Zustand vor, während die dem Träger 2 abgewandte, äußere Unterschicht 4 der Klebmasse-Schicht 5 klebend ausgerüstet ist. Die Klebemasse-Schicht 5 kann weitere Unterschichten umfassen.

### Bezugszeichenliste

- 1: Klebfolie
- 2: Träger
- 3: innere Unterschicht (im mechanisch gespannten Zustand)
- 4: äußere Unterschicht (klebend)
- 5: Klebemasse, bestehend aus der inneren Unterschicht 3 und der äußeren Unterschicht 4
- 6: Releaseliner

- 3': innere Unterschicht einer zweiten Klebemasse
- 4': äußere Unterschicht einer zweiten Klebemasse

## Patentansprüche

1. Klebfolie, insbesondere für die Verwendung in einem Stanzprozess, umfassend einen Träger (2) und zumindest eine Schicht einer Klebemasse (5), **dadurch gekennzeichnet, dass** die Klebemasse (5) zwei oder mehr Unterschichten (3, 4) aufweist und mindestens eine der Unterschichten (3) in einem mechanisch gespannten Zustand vorliegt.

2. Klebfolie nach Anspruch 1, **dadurch gekennzeichnet, dass** die Klebemasse-Schicht (5) eine innere Unterschicht (3), die dem Träger (2) zugewandt ist, und eine äußere Unterschicht (4), die dem Träger (2) abgewandt ist, umfasst, wobei die äußere Unterschicht (4) klebend ist.

3. Klebfolie nach Anspruch 1 oder Anspruch 2, **dadurch gekennzeichnet, dass** zwischen der inneren Unterschicht (3) und der äußeren Unterschicht (4) weitere Unterschichten angeordnet sind.

4. Klebfolie nach Anspruch 1 oder Anspruch 2, **dadurch gekennzeichnet, dass** die innere Unterschicht (3) oder eine der weiteren Unterschichten eine Unterschicht in einem mechanisch gespannten Zustand ist und die äußere Unterschicht (4) klebend ist.

5. Klebfolie nach einem der vorstehenden Ansprüche, **dadurch gekennzeichnet, dass** die Klebemasse-Schicht (5) anisotrope Eigenschaften besitzt.

6. Klebfolie nach einem der vorstehenden Ansprüche, **dadurch gekennzeichnet, dass** der Träger beidseitig mit einer Klebemasse-Schicht (5, 5') beschicht ist, wobei zumindest eine der beiden Klebemassen-Schichten (5) zwei oder mehr Unterschichten (3, 4) umfasst, von denen mindestens eine in einem mechanisch gespannten Zustand vorliegt.

7. Klebfolie nach Anspruch 6, **dadurch gekennzeichnet, dass** jede der beiden Klebemasse-Schichten (5, 5') zwei oder mehr Unterschichten (3, 3', 4, 4') umfasst, von denen jeweils mindestens eine (3, 3') in einem mechanisch gespannten Zustand vorliegt.

8. Klebfolie nach Anspruch 6, **dadurch gekennzeichnet, dass** nur eine der beiden Klebemasse-Schichten (5, 5') zwei oder mehr Unterschichten (3, 4) umfasst, von denen mindestens eine (3) in einem mechanisch gespannten Zustand vorliegt.

9. Verfahren zur Herstellung einer Klebefolie nach einem der Ansprüche 1 bis 8, **dadurch gekennzeichnet, dass** eine Klebemasse, die zwei oder mehr Unterschichten umfasst, im gereckten Zustand auf ein flächiges Material (2, 6) unter Erhalt der Klebemasse-Schicht (5) beschicht wird, wobei zumindest eine (3) der Unterschichten (3, 4) der Klebemasse-Schicht (5) in einem mechanisch gespannten Zustand vorliegt.

10. Verfahren nach Anspruch 9, **dadurch gekennzeichnet, dass** das flächige Material ein Träger (2) oder ein Releaseliner (6) ist.

11. Verfahren nach Anspruch 9 oder Anspruch 10, **dadurch gekennzeichnet, dass** die Klebemasse-Schicht (5) nach dem Beschichten auf das flächige Material vernetzt wird.

12. Verfahren nach einem der Ansprüche 9 bis 11, umfassend
(a) das Beschichten einer ersten Oberfläche des Trägers (2) mit einer Klebemasse im gereckten Zustand;
(b) das Vernetzen der Klebemasse-Schicht (5) auf dem Träger (2); und
(c) gegebenenfalls das Abdecken der Klebemasse-Schicht (5) mit einem Releaseliner (6).

13. Verfahren nach Anspruch 12, umfassend
(d) das Beschichten der zweiten Oberfläche des Trägers (2) mit einer zweiten Klebemasse im gereckten Zustand, wobei die zweite Klebemasse-Schicht (5'), die auf die zweite Oberfläche aufgebracht wird, sich von der ersten Klebemasse-Schicht (5), die auf die erste Oberfläche des Trägers (2) in Schritt (a) aufgebracht worden ist, in ihrem Aufbau oder ihrer Zusammensetzung gleichen oder sich von dieser unterscheiden kann; und
(e) das Vernetzen der zweiten Klebemasse-Schicht (5') auf dem Träger (2).

14. Stanzlinge, hergestellt durch Stanzung einer Klebfolie (1) nach einem der Ansprüche 1 bis 8.

## Claims

1. Adhesive sheet, particularly for use in a punching operation, comprising a backing (2) and at least one layer of an adhesive (5), **characterized in that** the adhesive (5) has two or more sublayers (3, 4) and at least one of the sublayers (3) is present in a mechanically tensioned state.

2. Adhesive sheet according to Claim 1, **characterized in that** the adhesive layer (5) has an inner sublayer (3), which faces the backing (2), and an outer sublayer (4), which is remote from the backing (2), the outer sublayer (4) being adhesive.

3. Adhesive sheet according to Claim 1 or Claim 2, **characterized in that** between the inner sublayer (3) and the outer sublayer (4) there are further sublayers disposed.

4. Adhesive sheet according to Claim 1 or Claim 2, **characterized in that** the inner sublayer (3) or one of the further sublayers is a sublayer in a mechanically tensioned state and the outer sublayer (4) is adhesive.

5. Adhesive sheet of any of the preceding claims, **characterized in that** the layer of adhesive (5) possesses anisotropic properties.

6. Adhesive sheet of any of the preceding claims, **characterized in that** the backing is coated on both sides with a layer of adhesive (5, 5'), at least one of the two layers of adhesive (5) comprising two or more sublayers (3, 4) of which at least one is present in a mechanically tensioned state.

7. Adhesive sheet according to Claim 6, **characterized in that** each of the two layers of adhesive (5, 5') comprises two or more sublayers (3, 3', 4, 4') of which in each case at least one (3, 3') is present in a mechanically tensioned state.

8. Adhesive sheet according to Claim 6, **characterized in that** only one of the two layers of adhesive (5, 5') comprises two or more sublayers (3, 4) of which at least one (3) is present in a mechanically tensioned state.

9. Process for producing an adhesive sheet according to any of Claims 1 to 8, **characterized in that** an adhesive which comprises two or more sublayers is coated in the drawn state onto a sheetlike material (2, 6) to give the layer of adhesive (5), at least one (3) of the sublayers (3, 4) of the layer of adhesive (5) being present in a mechanically tensioned state.

10. Process according to Claim 9, **characterized in that** the sheetlike material is a backing (2) or a release liner (6).

11. Process according to Claim 9 or Claim 10, **characterized in that** the layer of adhesive (5) is crosslinked after having been coated onto the sheetlike material.

12. Process according to any of Claims 9 to 11, comprising
(a) coating a first surface of the backing (2) with an adhesive in the drawn state;
(b) crosslinking the layer of adhesive (5) on the backing (2); and
(c) optionally lining the layer of adhesive (5) with a release liner (6).

13. Process according to Claim 12, comprising
(d) coating the second surface of the backing (2) with a second adhesive in the drawn state, the second layer of adhesive (5') which is applied to the second surface possibly being the same as or different from the first layer of adhesive (5) applied to the first surface of the backing (2) in step (a) in terms of its construction or its composition; and
(e) crosslinking the second layer of adhesive (5') on the backing (2).

14. Punched products produced by punching an adhesive sheet (1) according to any of Claims 1 to 8.

## Revendications

1. Feuille adhésive, en particulier pour une utilisation dans un procédé d'estampage, comprenant un support (2) et au moins une couche d'une masse adhésive (5), **caractérisée en ce que** la masse adhésive (5) présente deux sous-couches (3, 4) ou plus et **en ce qu'**au moins une des sous-couches (3) se trouve à un état de contrainte mécanique.

2. Feuille adhésive selon la revendication 1, **caractérisée en ce que** la couche de masse adhésive (5) comprend une sous-couche intérieure (3), qui est orientée vers le support (2), et une sous-couche extérieure (4), qui est orientée dans la direction opposée au support (2), la sous-couche extérieure (4) étant adhésive.

3. Feuille adhésive selon la revendication 1 ou la revendication 2, **caractérisée en ce que** des sous-couches supplémentaires sont agencées entre la sous-couche intérieure (3) et la sous-couche extérieure (4).

4. Feuille adhésive selon la revendication 1 ou la revendication 2, **caractérisée en ce que** la sous-couche intérieure (3) ou une des sous-couches supplémentaires est une sous-couche à un état de contrainte mécanique et la sous-couche extérieure (4) est adhésive.

5. Feuille adhésive selon l'une quelconque des revendications précédentes, **caractérisée en ce que** la couche de masse adhésive (5) présente des propriétés anisotropes.

6. Feuille adhésive selon l'une quelconque des revendications précédentes, **caractérisée en ce que** le support est revêtu des deux côtés avec une couche de masse adhésive (5, 5'), au moins une des deux couches de masse adhésive (5) comprenant deux sous-couches (3, 4) ou plus, parmi lesquelles au moins une se trouve à un état de contrainte mécanique.

7. Feuille adhésive selon la revendication 6, **caractérisée en ce que** chacune des deux couches de masse adhésive (5, 5') comprend deux sous-couches (3, 3', 4, 4') ou plus, parmi lesquelles à chaque fois au moins une (3, 3') se trouve à un état de contrainte mécanique.

8. Feuille adhésive selon la revendication 6, **caractérisée en ce qu'**une seule des deux couches de masse adhésive (5, 5') comprend deux sous-couches (3, 4) ou plus, parmi lesquelles au moins une (3) se trouve à un état de contrainte mécanique.

9. Procédé de fabrication d'une feuille adhésive selon l'une quelconque des revendications 1 à 8, **caractérisé en ce qu'**une masse adhésive qui comprend deux sous-couches ou plus est revêtue à l'état étiré sur un matériau plat (2, 6) pour obtenir la couche de masse adhésive (5), au moins une (3) des sous-couches (3, 4) de la couche de masse adhésive (5) se trouvant à un état de contrainte mécanique.

10. Procédé selon la revendication 9, **caractérisé en ce que** le matériau plat est un support (2) ou un revêtement antiadhésif (6).

11. Procédé selon la revendication 9 ou la revendication 10, **caractérisé en ce que** la couche de masse adhésive (5) est réticulée après le revêtement sur le matériau plat.

12. Procédé selon l'une quelconque des revendications 9 à 11, comprenant :
(a) le revêtement d'une première surface du support (2) avec une masse adhésive à l'état étiré ;
(b) la réticulation de la couche de masse adhésive (5) sur le support (2) ; et
(c) éventuellement le recouvrement de la couche de masse adhésive (5) avec un revêtement antiadhésif (6).

13. Procédé selon la revendication 12, comprenant :
(d) le revêtement de la deuxième surface du support (2) avec une deuxième masse adhésive à l'état étiré, la deuxième couche de masse adhésive (5'), qui est appliquée sur la deuxième surface, pouvant être identique à la première couche de masse adhésive (5), qui a été appliquée sur la première surface du support (2) à l'étape (a), en termes de sa structure ou de sa composition, ou être différente de celle-ci ; et
(e) la réticulation de la deuxième couche de masse adhésive (5') sur le support (2).

14. Pièce estampée, fabriquée par estampage d'une feuille adhésive (1) selon l'une quelconque des revendications 1 à 8.
